# EUROPEAN PATENT SPECIFICATION

(11) **EP 3 046 343 B1**
(45) Date of publication and mention of the grant of the patent: **25.12.2019**
(21) Application number: 16150998.9
(22) Date of filing: 13.01.2016
(51) Int. Cl.: H04W 4/00

(54) **PROVISIONING OF AN ADDITIONAL SERVICE RELATED TO A MOBILE TERMINAL**
BEREITSTELLUNG EINES ZUSATZDIENSTES IN ZUSAMMENHANG MIT EINEM MOBILEN ENDGERÄT
FOURNITURE D'UN SERVICE SUPPLÉMENTAIRE SE RAPPORTANT À UN TERMINAL MOBILE

(30) Priority: 13.01.2015 SE 1550021
(43) Date of publication of application: 20.07.2016
(73) Proprietor: Telia Company AB, 169 94 Solna (SE)
(72) Inventor: BRETAN, Ivan, 11641 STOCKHOLM (SE); AF SANDEBERG, Johan, 11531 STOCKHOLM (SE); ROTH, Lars, 13552 TYRESÖ (SE)
(74) Representative: Berggren Oy, Helsinki & Oulu

(56) References cited:
- EP-A1- 2 540 051
- CN-A- 103 795 725
- JP-B2- 4 481 534
- US-A1- 2014 024 348

## Description

### TECHNICAL FIELD

The invention concerns in general the technical field of testing solutions. Especially the invention concerns testing of at least one unit of a mobile terminal.

### BACKGROUND

Mobile terminals are high technology devices and for that reason the price of them tends to be high. Further, as the mobile terminals are under heavy use there is a risk that they get broken for example due to fall down or similar.

Due to reasons above service providers, such as telecom operators, have started offering additional services, such as insurances, to the users. The user may acquire an insurance electronically i.e. by utilizing communication facilities of the mobile device. The challenge with the service provider is that when the user is acquiring the additional service being dependent on characteristics of the mobile terminal, the service provider shall be aware of a condition of the mobile terminal being able to grant the additional service or not. For example, if user wants to get insurance to the mobile terminal, the service provider shall be aware that the mobile terminal is not already broken.

Thus, there is need to establish a solution for testing the device prior to granting any additional service, such as insurance, for the mobile terminal or similar.

### SUMMARY

An objective of the invention is to present a method and a server for providing an additional service related to a mobile terminal. Another objective of the invention is that the provision of the additional service, by the method and the server, is at least partly dependent on testing at least one characteristic of the mobile terminal

The objectives of the invention are reached by a method and a server as defined by the respective independent claims.

According to a first aspect, a method for providing an additional service related to a mobile terminal is provided, the method comprising: receiving a request for the additional service; retrieving at least one characteristic of the mobile terminal; comparing the at least one characteristic to a comparison value defined for the characteristic; providing the additional service if a predetermined number of the compared at least one characteristic meets a comparison value defined for the at least one characteristic.

The retrieval of at least one characteristic of the mobile terminal may be initiated by instructing the mobile terminal to perform a testing procedure to at least one unit of the mobile terminal. The testing procedure may comprise interaction between the user of the mobile terminal and the mobile terminal through a user interface of the mobile terminal. Further, the testing procedure may be at least partly dependent on a type of the mobile terminal. The type of the mobile terminal may be determined on a basis of an International Mobile Station Equipment Identity, IMEI. The International Mobile Station Equipment Identity, IMEI, may be requested from at least one of the following: the mobile terminal requesting the additional service, a register residing in a mobile communication network.

The testing procedure may be directed to a display of the mobile terminal or a touch display of the mobile terminal. The testing procedure may comprise: generating at least one random character displayed on the display, receiving a user input, comparing if the received user input corresponds to the generated random character. Alternatively or in addition, the testing procedure may comprise: generating at least one visual spot on the display, monitoring if a user provides a touch gesture to the at least one visual spot on the display. Alternatively or in addition, the testing procedure may comprise: generating a pattern on a display, taking a picture on the display displaying the pattern with a camera of the mobile terminal by means of a mirror, analyzing if the pattern disclosed in the picture sufficiently corresponds to the generated pattern displayed on the display.

According to a second aspect, a server providing an additional service related to a mobile terminal is provided, wherein the server comprises at least one processor, and at least one memory storing at least one portion of computer program code, wherein the processor being configured to cause the server at least to perform: receive a request for the additional service, retrieve at least one characteristic of the mobile terminal, compare the at least one predetermined characteristic to a comparison value defined for the characteristic, provide the additional service if a predetermined number of the compared at least one characteristic meets a comparison value defined for the at least one characteristic.

The server may be configured to initiate the retrieval of the at least one characteristic of the mobile terminal by instructing the mobile terminal to perform a testing procedure to at least one unit of the mobile terminal. The server may be configured to request an International Mobile Station Equipment Identity, IMEI, from at least one of the following: the mobile terminal requesting the additional service, a register residing in a mobile communication network. The server may be configured to determine a type of the mobile terminal on a basis of an International Mobile Station Equipment Identity, IMEI. The server may be configured to set up a testing procedure for the mobile terminal on the basis of the International Mobile Station Equipment Identity, IMEI, in order to determine the at least one characteristic of the mobile terminal.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings. US 2014024348, EP 2540051, CN 103795725 and JP 4481534 are considered prior art.

### BRIEF DESCRIPTION OF FIGURES

The embodiments of the invention are illustrated by way of example, and not by way of limitation, in the figures of the accompanying drawings.
Figure 1 illustrates schematically an environment of the invention.
Figure 2 illustrates schematically an example of the invention as a flow chart.
Figure 3 illustrates an example of a server according to the invention.
Figure 4 illustrates an example of a mobile terminal relating to the invention.

### DESCRIPTION OF SOME EMBODIMENTS

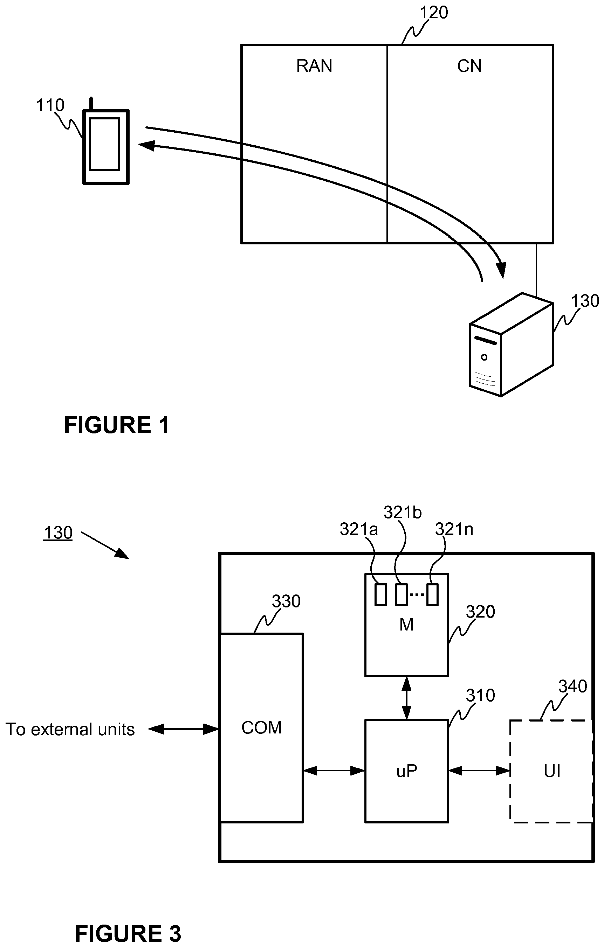

The invention is defined by the appended claims. Figure 1 illustrates schematically an environment of the invention wherein a mobile terminal 110 is communicatively coupled to a server 130 over a mobile communication network 120. The mobile communication network 120 comprises a radio access network RAN and a core network CN, which are known entities within mobile communication networks and are not described in more detail herein. Even if the Figure 1 discloses that the mobile terminal 110 and the server 130 are communicatively coupled over a mobile communication network 120, the coupling may also be arranged either completely in a wired manner using wired network resources or in combination using both wired and wireless communication resources in the coupling. The mobile terminal 110 may comprise specific application software installed in the mobile terminal 110, which is configured to communicate with internal units of the mobile terminal 110 as well as with the server 130 in a manner as will be described later.

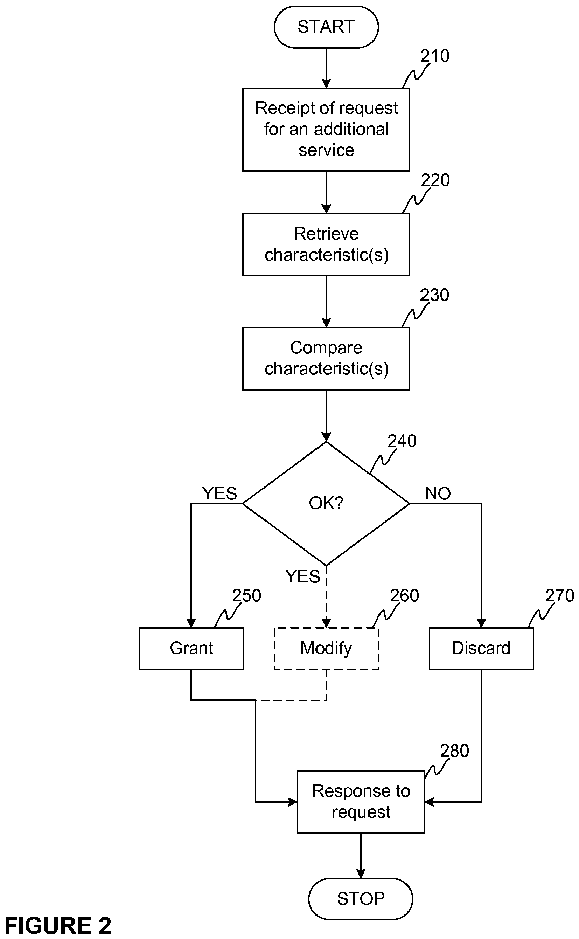

Figure 2 discloses schematically an example of the invention as a flow chart. In a first step a user of a mobile terminal 110 may request an additional service 210, such as insurance, for his/her mobile terminal 110. The request may be indicated in some predetermined manner. The predetermined manner may e.g. be that the user activates an application installed in the mobile terminal 110 and selects such parameters in the application, which cause the application to establish a communication connection to the server 130 in order to indicate that the user is willing to activate, or take, the additional service. The additional service herein refers to such a service the grant of which is at least partly dependent on characteristics of the mobile terminal 110.

Next, in response to the receipt of the request the server 130 is configured to retrieve characteristics of the mobile terminal 220 in order to make a decision if the additional service shall be granted or not. The retrieval of characteristics 220 refers to an operation by means of which it is possible to test functionality of the mobile terminal 110, or at least some units of the mobile terminal 110. The units under interest are those, which are either needed in the additional service or are to be covered with the additional service, such as with the insurance. The retrieval of characteristics may be initiated and performed in multiple ways. If the specific application software is installed in the mobile terminal 110 for interaction with the server 130 being configured to manage, at least partly, the granting operation of the additional service, the server 130 may be configured to instruct the application for retrieving at least one characteristic of the mobile terminal 110. For example, the server 130 may instruct the application to initiate a predetermined testing procedure of at least one unit of the mobile terminal 110. Alternatively, or in addition, the server 130 may be configured to deliver device specific instructions to the mobile terminal 110 in order to determine the at least one characteristic of the mobile terminal 110 for making the decision if the additional service shall be granted or not. The aspects relating to the retrieval of information will be discussed later.

The mobile terminal 110 is configured to provide the at least one retrieved characteristic to the server 130, which is configured to analyze the retrieved information 230. The aim of the analysis is to define if the additional service may be granted to the mobile terminal 110 or not. During the analysis the server 130 at least compares the retrieved pieces of information on the at least one characteristic to predetermined comparison value either directly or indirectly. On the basis of the outcome of the comparison the server is configured to decide 240 if the additional service shall be granted, modified or discarded to the mobile terminal. For example, the decision-making may be implemented so that if the characteristic or characteristics are acceptable, the additional service may be granted 250. On the contrary, if a predetermined amount of the characteristics is not acceptable, the request for additional service may be discarded 270. The discard of the request may e.g. be communicated to the user requesting the additional service. It is also possible to arrange a further possibility i.e. to modify at least one feature of the additional service accordingly 260 and provide the service in the modified form to the user. The outcome from steps 250, 260 and 270 are advantageously communicated to the mobile terminal in a response to the request 280. Some further confirmation steps may be arranged, but they are not disclosed in Figure 2. Moreover, the server 130 may be configured to initiate necessary steps according to the outcome in order to establish the additional service for the user in a determined form if any.

Next, the invention is described from such point of view wherein it is important to determine if the mobile terminal 110, or at least one unit therein, operates without defects, i.e. is not broken. For example, the modern mobile terminal, e.g. a smart phone, is vulnerable to get broken when dropped. Especially, a display, which typically also operates as an input device (touch screen), and a camera are examples of units that get broken rather easily. Thus, it is important for a service provider, such as the party granting insurances, to confirm prior to granting of the insurance that the mobile terminal, and the predetermined units therein, is not broken. Thus, according to the invention the server 130 may be configured to initiate a testing procedure of at least some units of the mobile terminal 110 in response to a receipt of a request of the additional service in question. The initiation may be performed e.g. by instructing the application software residing in the mobile terminal 110 to perform a testing procedure defined in the application. The testing procedure may comprise sub-tests for all units within the mobile terminal 110 or for only part of them. The following table discloses at least some examples of units within the mobile terminal and a description on a corresponding test to the unit:

| **ID** | **Test area** | **Test case** | **Description** |
|---|---|---|---|
| 1.1 | Camera | Front camera test | Take a picture with front camera and submit photo with time stamp |
| 1.2 | Camera | Back camera test | Take a picture with back camera and submit photo with time stamp |
| 2 | Microphone | Microphone test | Record user reading prompted text and submit audio with time stamp |
| 3 | Speaker | Speaker test | Test external speaker |
| 4 | Movement | Movement test | Test movement sensor by shaking |
| 5.1 | Location | GPS location test | Detect GPS location and submit location with time stamp |
| 5.2 | Location | Network location test | Detect network based location and submit location with time stamp |
| 6.1 | Connectivity | NFC test | Test NFC sensor |
| 6.2 | Connectivity | Bluetooth test | Test Bluetooth connection and transmission |
| 6.3 | Connectivity | Cellular data test | Test cellular data connection and transmission (3G/4G) |
| 6.4 | Connectivity | WiFi data test | Test WiFi connection and transmission |
| 7.1 | Display | Pixel test | Check and report dead pixels |
| 7.2 | Display | Readability test | Check readability by prompting the user to verify random words written across the screen. |
| 7.3 | Display | Touch test | Test multi-touch functionality across the screen. |
| 7.4 | Display | Mirror photo | Take photo using front camera having the device facing its display towards a mirror. |
| 8.1 | Memory | RAM test | Test that RAM is functioning properly |
| 8.2 | Memory | SD card test | Test that SD card is functioning properly |
| 9.1 | CPU | CPU test | Test that CPU is functioning properly |
| 9.2 | CPU | Graphics test | Test that graphics processor is functioning properly |
| 10.1 | Parameter reporting | IMEI | Log and report IMEI |
| 10.2 | Parameter reporting | Phone model | Log and report phone model |

According to an embodiment of the invention the server 130 may be configured to determine on a device-by-device basis the testing procedure. This may be achieved by configuring the mobile terminal 110, when requesting the additional service, to provide information on the mobile terminal 110 e.g. by means of the application residing in the mobile terminal. The information may e.g. be received by prompting the information from the user. The prompted information may comprise, but is not limited to, the brand and the model of the mobile terminal. Alternatively or in addition, the server 130 may be configured to determine an International Mobile Station Equipment Identity (IMEI) of the mobile terminal in question. The IMEI is a unique identifier of the terminal in question, which may be used for inquiring the brand and the model type of the mobile terminal 110 from a database. According to a first embodiment the server may request the IMEI from a register residing in the mobile communication network and storing terminal related information in the context of the subscriber related information. Alternatively or in addition, the mobile terminal 110 may deliver the IMEI e.g. together with the request of additional service or separately e.g. in response to an inquiry by the server 130. The IMEI may e.g. be delivered by utilizing an application residing and running in the mobile terminal 110, as the mobile terminal stores the IMEI information in a memory.

As the server 130 is aware of the type of the mobile terminal 110 requesting the additional service it may be configured to determine the testing procedure for the mobile terminal 110. For example, the server 110 may have access to a data storage maintaining information on typical defects of mobile terminals on a type basis. Alternatively or in addition, the server 130 may receive information on the units existing in the mobile terminal from the data storage. On the basis of the received information the server may set-up a testing procedure for the mobile terminal in question. The server 130 may be configured to deliver the testing procedure, or at least some parameters, such as the unit information to be tested, to the mobile terminal when the server 130 instructs the mobile terminal 110 to perform the testing procedure. In the described manner the service provider may adjust the testing procedure applicable to the needs and specific to the mobile terminal type. The testing procedure as such may be implemented either in such a manner that it requires interaction from the user or in such a manner that the mobile terminal is configured to perform the testing procedure on its own. Moreover, the testing procedure may either be arranged so that the testing application residing in the mobile terminal analyzes the test results or delivers the test results to the server for analysis, or any combination on these two.

Some more detailed examples on testing procedures for a display of a mobile terminal 110 are introduced. First one relates to a testing procedure for a display in a sense if a content disclosed on the screen is readable. The test is referred as a readability test in the table above. The readability test is arranged so that it may generate character combinations, such as random letters and numbers, in various places of the display. The user is then prompted to input those characters rendered in order to verify the legibility of the strings. Failure to do so may indicate that the screen is broken enough to reduce readability. The implementation of the test may be arranged so that the application software is configured to generate random characters and random positions for them and store information on the characters and positions in the memory of the mobile terminal. After receiving the input from the user the application software is configured to compare if the input corresponds to the stored information. If this is the case, the test is passed. Otherwise, the test is not passed. The outcome may be advantageously delivered to the server 130. In an alternative implementation of the invention the readability test may e.g. be arranged so that the server is configured to generate the character(s) to be displayed and position information thereto. The server delivers the information to be displayed to the mobile terminal and the application software is configured to read the information and display it accordingly and prompt the user to input the displayed character(s). The input information is delivered back to the server by the mobile terminal when instructed by the application software and the server is configured to check if the input information matches with the displayed character(s).

Another testing procedure, which may either be implemented alone or in combination with any other test, such as with the readability test, may e.g. be such that tests the operation of the touch screen. The testing procedure may be herein called as touch input test. The touch input test may be arranged so that the user is prompted to press the display with one or more fingers, i.e. providing a touch gesture, in one or more generated spots on the display in order to verify that the touch capabilities of the device are preserved. The prompting may be arranged so that one or more spots are displayed on the display and when the user touches the display at a corresponding position to the spot and the touch input is detected by the mobile terminal 110 a new spot is displayed. This may e.g. be continued so that a necessary number of spots are displayed in order to confirm that the touch display works. Again, the application software may be configured to perform the test independently when executed by the processor or in communicative cooperation with the server 130 as described in the context of the readability test. As the visualization of the spot is implemented the detection of touch may be based on resistive, capacitive or surface acoustic wave technology or any similar known touch screen technology.

A further example of a testing procedure regarding the display of the mobile terminal 110 may be a test in which a photo is taken on the display of the mobile terminal by means of the camera locating on the same side as the display in the mobile terminal 110 via a mirror. In other words, the testing procedure may instruct the user to arrange a mirror. The testing procedure may be configured to prompt user to position the display of the mobile terminal towards the mirror and determine that a front camera, i.e. the camera locating on the same side as the display, is determined to take a photo. Additionally, the testing procedure may be configured to give additional instructions to the user, such as adjusting the light optimally in the space, instructing an optimal distance of the camera and the mirror, instructing to find an optimal mutual position of the mobile terminal and the mirror and so on. Moreover, the testing procedure may be configured to implement one or more predetermined pattern(s) on the display and take one or more pictures so that the picture comprises the content shown on the display at each time when the photo is taken. The taken pictures may be delivered to the server for e.g. further analysis in which analysis it is determined if the display operates properly or not. The analysis comprises at least a comparison if the pattern disclosed in the taken picture sufficiently corresponds to the generated pattern displayed on the display. In some further implementation the predetermined pattern shown on the display may be configured to be unique for each mobile terminal and it may e.g. comprise an identifier, such as IMEI number of a mobile terminal fetched from a memory of the terminal during the testing procedure. Alternatively or in addition, the content shown on the display at the time of taking the picture may comprise a date and a time retrieved by the software application from e.g. telecommunication network via communication interface between the mobile terminal and the telecommunication network or from any other source. The generation of patterns to be displayed may be implemented by the application software residing in the mobile terminal or alternatively the pattern(s) may be generated by the server and transmitted to the mobile terminal. The server may be configured to judge if the test is passed or not in response to receipt of the taken pictures and analysis of them.

Figure 3 discloses an example of a server 130 according to the invention. The server 130 may comprise one or more processors 310, one or more memories 320 being volatile or non-volatile for storing portions of computer program code 321a-321n and any data values, a communication interface 330 and possibly one or more user interface units 340. The mentioned elements are communicatively coupled to each other with e.g. an internal bus. The communication interface provides interface for communication with any external unit, such as with one or more network nodes, one or more data storages, one or more mobile terminals, for example. The communication interface is based on one or more known communication technologies, either wired or wireless, in order to communicate with an external unit in question.

The processor 310 of the server 130 is at least configured to implement the method as described. The implementation of the method may be achieved by arranging the processor 310 to execute at least some portion of computer program code 321a-321n stored in the memory 320 causing the processor 310, and thus the server 130, to implement one or more method steps as described. Hence, the processor 310 is arranged to access the memory 320 and retrieve and store any information therefrom and thereto. Moreover, the processor 310 is configured to control the communication through the communication interface 330 with any external unit. The processor 310 may also be configured to control the output of information, i.e. data. The processor 310 may also be configured to control storing of received and delivered information. For sake of clarity, the processor herein refers to any unit suitable for processing information and control the operation of the server, among other tasks. The mentioned operations may e.g. be implemented with a microcontroller solution with embedded software. Similarly, the invention is not limited to a certain type of memory only, but any memory type suitable for storing the described pieces of information may be applied in the context of the present invention.

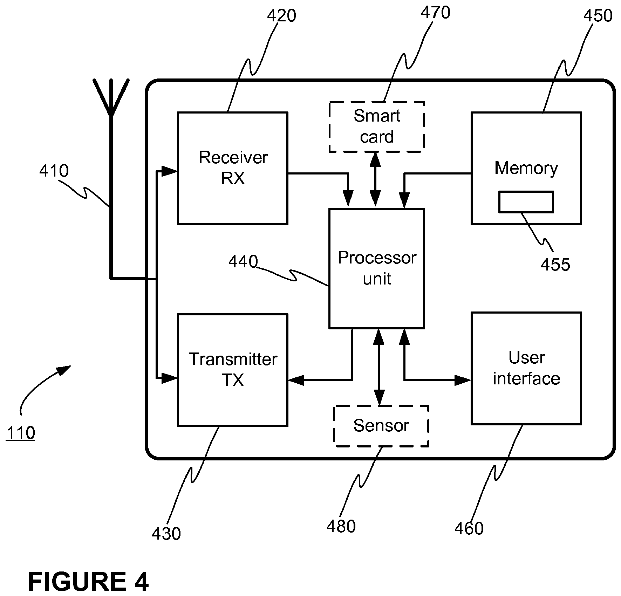

Figure 4 illustrates an example of a mobile terminal 110 relating to the invention. The mobile terminal 110 comprises multiple units as depicted in the Figure 4. For example, the mobile terminal may comprise, but it is not limited to these only, the following units: one or more antennas 410; one or more receivers 420; one or more transmitters 430; one or more processors 440; one or more memories 450; one or more user interface units 460, such as button, display, keyboard, microphone, loudspeaker or similar; one or more smart cards 470, such as SIM; and one or more sensors 480, such as temperature, moisture or motion sensors. If the testing of the mobile terminal 110 is based on application software, the application software 455 may be stored in a memory 450 of the mobile terminal 110 and it is executed by the processor 440.

The invention as described above provide a mechanism to determine if an additional service shall be granted for a mobile terminal or not, or even a way to adjust the service in response to the determination of the characteristics of the mobile terminal. The described mechanism enables the service provider improving certainty that the user does not cheat the service provider when requesting the additional service.

The server 130 may belong to a telecom operator offering the additional service or be an entity, such as an insurance company, utilizing communication resources provided by a telecom operator.

Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A method for providing an additional service related to a mobile terminal, comprising
- receiving (210) a request for the additional service,
- retrieving (220) at least one characteristic of the mobile terminal by instructing the mobile terminal to perform a testing procedure to at least one unit of the mobile terminal wherein the testing procedure is determined on a basis of a type of the mobile terminal wherein the type of the mobile terminal is determined on a basis of an International Mobile Station Equipment Identity, IMEI, the International Mobile Station Equipment Identity, IMEI, being requested from at least one of the following: the mobile terminal requesting the additional service, a register residing in a mobile communication network,
- comparing (230) the at least one characteristic to a comparison value defined for the characteristic wherein the at least one characteristic is retrieved with the testing procedure,
- providing (240) the additional service if a predetermined number of the compared at least one characteristic meets a comparison value defined for the at least one characteristic.

2. The method of claim 1, wherein the testing procedure comprises interaction between the user of the mobile terminal and the mobile terminal through a user interface of the mobile terminal.

3. The method of any of the claims 1-2, wherein the testing procedure is directed to a display of the mobile terminal or a touch display of the mobile terminal.

4. The method of claim 3, wherein the testing procedure comprising:
- generating at least one random character displayed on the display,
- receiving a user input,
- comparing if the received user input corresponds to the generated random character.

5. The method of claim 3, wherein the testing procedure comprising:
- generating at least one visual spot on the display,
- monitoring if a user provides a touch gesture to the at least one visual spot on the display.

6. The method of claim 3, wherein the testing procedure comprising:
- generating a pattern on a display,
- taking a picture on the display displaying the pattern with a camera of the mobile terminal by means of a mirror,
- analyzing if the pattern disclosed in the picture sufficiently corresponds to the generated pattern displayed on the display.

7. A server (130) for providing an additional service related to a mobile terminal (110), the server (140) comprising
- at least one processor (310), and
- at least one memory (320) storing at least one portion of computer program code (321a-321 n),
the processor (310) being configured to cause the server (130) at least to perform:
- receive a request for the additional service (210),
- retrieve at least one characteristic of the mobile terminal (220) by instructing the mobile terminal to perform a testing procedure to at least one unit of the mobile terminal wherein the testing procedure is determined on a basis of a type of the mobile terminal wherein the type of the mobile terminal is determined on a basis of an International Mobile Station Equipment Identity, IMEI, the International Mobile Station Equipment Identity, IMEI, being requested from at least one of the following: the mobile terminal requesting the additional service, a register residing in a mobile communication network,
- compare the at least one characteristic to a comparison value defined for the characteristic (230),
- provide the additional service if a predetermined number of the compared at least one characteristic meets a comparison value defined for the at least one characteristic (240).

## Patentansprüche

1. Verfahren zum Bereitstellen eines zusätzlichen Dienstes in Bezug auf ein Mobiltelefon, umfassend
- Empfangen (210) einer Anforderung nach dem zusätzlichen Dienst,
- Abrufen (220) wenigstens eines Merkmals des mobilen Terminals durch Anweisen des mobilen Terminals zum Durchführen eines Testverfahrens auf wenigstens einer Einheit des mobilen Terminals, wobei das Testverfahren auf einer Grundlage eines Typs des mobilen Terminals bestimmt wird, wobei der Typ des mobilen Terminals auf einer Grundlage einer International Mobile Station Equipment Identity, IMEI, bestimmt wird, wobei die Mobile Station Equipment Identity, IMEI, von wenigstens Einem der folgenden angefordert wird: dem mobilen Terminal, das den zusätzlichen Dienst anfordert, wobei ein Verzeichnis in einem Netzwerk zur mobilen Kommunikation angeordnet ist,
- Vergleichen (230) des wenigstens einen Merkmals mit einem Vergleichswert, der für das Merkmal definiert wird, wobei das wenigstens eine Merkmal mit dem Testverfahren abgerufen wird,
- Bereitstellen (240) des zusätzlichen Dienstes, wenn eine vorbestimmte Anzahl des verglichenen wenigstens einen Merkmals einem Vergleichswert genügt, der für das wenigstens eine Merkmal definiert wird.

2. Verfahren nach Anspruch 1, wobei das Testverfahren ein Zusammenwirken zwischen dem Nutzer des mobilen Terminals und dem mobilen Terminal durch die Nutzerschnittstelle des mobilen Terminals umfasst.

3. Verfahren nach irgendeinem der Ansprüche 1 - 2, wobei das Testverfahren auf eine Anzeige des mobilen Terminals oder eine berührungssensitive Anzeige des mobilen Terminals gerichtet ist.

4. Verfahren nach Anspruch 3, wobei das Testverfahren umfasst:
- Erzeugen wenigstens eines zufälligen Zeichens, das auf der Anzeige angezeigt wird,
- Empfangen einer Nutzereingabe,
- Vergleichen, ob die empfangene Nutzereingabe dem erzeugten zufälligen Zeichen entspricht.

5. Verfahren nach Anspruch 3, wobei das Testverfahren umfasst:
- Erzeugen wenigstens einer visuellen Stelle auf der Anzeige,
- Überwachen, ob ein Nutzer eine Berührungsgeste für die wenigstens eine visuelle Stelle auf der Anzeige bereitstellt.

6. Verfahren nach Anspruch 3, wobei das Testverfahren umfasst:
- Erzeugen eines Musters auf einer Anzeige,
- Aufnehmen eines Bildes auf der Anzeige, die das Muster mit einer Kamera des mobilen Terminals mittels eines Spiegels anzeigt,
- Analysieren, ob das Muster, in dem Bild offenbart wird, dem erzeugten Muster entspricht, das auf der Anzeige angezeigt wird.

7. Server (130) zum Bereitstellen eines zusätzlichen Dienstes in Bezug auf ein mobiles Terminal (110), wobei der Server (140) umfasst
- wenigstens einen Prozessor (310) und
- wenigstens einen Speicher (320), der wenigstens einen Abschnitt eines Computerprogramm-Codes (321a - 321n) speichert,
wobei der Prozessor (310) ausgestaltet ist, um den Server (130) zu veranlassen, wenigstens durchzuführen:
- Empfangen einer Anforderung nach dem zusätzlichen Dienst (210),
- Abrufen wenigstens eines Merkmals des mobilen Terminals (220) durch Anweisen des mobilen Terminals zum Durchführen eines Testverfahrens auf wenigstens einer Einheit des mobilen Terminals, wobei das Testverfahren auf einer Grundlage eines Typs des mobilen Terminals bestimmt wird, wobei der Typ des mobilen Terminals auf einer Grundlage einer International Mobile Station Equipment Identity, IMEI, bestimmt wird, wobei die International Mobile Station Equipment Identity, IMEI, von wenigstens Einem der folgenden angefordert wird: dem mobilen Terminal, das den zusätzlichen Dienst anfordert, wobei ein Verzeichnis in einem mobilen Kommunikationsnetzwerk angeordnet ist,
- Vergleichen des wenigstens einen Merkmals mit einem Vergleichswert, der für das Merkmal (230) definiert wird,
- Bereitstellen des zusätzlichen Dienstes, wenn eine vorbestimmte Anzahl des verglichenen wenigstens einen Merkmals einem Vergleichswert genügt, der für das wenigstens eine Merkmal (240) definiert wird.

## Revendications

1. Procédé pour fournir un service additionnel pour le terminal mobile, comprenant de :
- recevoir (210) une demande du service additionnel ;
- extraire (220) au moins une caractéristique du terminal mobile en donnant instruction au terminal mobile d'effectuer une procédure de test vers au moins une unité du terminal mobile, dans lequel la procédure de test est déterminée sur une base d'un type du terminal mobile, dans lequel le type du terminal mobile est déterminé sur une base d'une Identité d'Equipement de Station Mobile Internationale, IMEI, l'identité d'équipement de station mobile internationale, IMEI, étant demandée par au moins un des suivants : le terminal mobile demandant le service additionnel, un registre résidant dans un réseau de communication mobile,
- comparer (230) au moins une caractéristique avec une valeur de comparaison définie pour la caractéristique, dans lequel au moins une caractéristique est extraite avec la procédure de test,
- fournir (240) le service additionnel si un nombre prédéterminé d'au moins une caractéristique comparée satisfait à une valeur de comparaison définie pour au moins une caractéristique.

2. Procédé selon la revendication 1, dans lequel la procédure de test comprend une interaction entre l'utilisateur du terminal mobile et le terminal mobile par l'intermédiaire d'une interface d'utilisateur du terminal mobile.

3. Procédé selon une quelconque des revendications 1-2, dans lequel la procédure de test est dirigée vers un affichage du terminal mobile ou un affichage tactile du terminal mobile.

4. Procédé selon la revendication 3, dans lequel la procédure de test comprend de :
- générer au moins un caractère aléatoire affiché sur l'écran,
- recevoir une saisie d'utilisateur,
- comparer si la saisie d'utilisateur reçue correspond au caractère aléatoire généré.

5. Procédé selon la revendication 3, dans lequel la procédure de test comprend de :
- générer au moins un point visuel sur l'affichage,
- surveiller si un utilisateur fournit un geste tactile vers au moins un point visuel sur l'affichage.

6. Procédé selon la revendication 3, dans lequel la procédure de test comprend de :
- générer un motif sur un affichage,
- prendre une photo de l'affichage affichant le motif avec une caméra du terminal mobile au moyen d'un miroir,
- analyser si le motif exposé dans la photo correspond suffisamment au motif généré affiché sur l'écran.

7. Serveur (130) pour fournir un service additionnel relatif à un terminal mobile (110), le serveur (140) comprenant :
- au moins un processeur (310), et
- au moins une mémoire (320) mémorisant au moins une portion du code de programme informatique (321a-321n),
le processeur (310) étant configuré pour amener le serveur (130) à effectuer au moins les étapes consistant à :
- recevoir une demande du service additionnel (210) ;
- extraire au moins une caractéristique du terminal mobile (220) en donnant instruction au terminal mobile d'effectuer une procédure de test vers au moins une unité du terminal mobile, dans lequel la procédure de test est déterminée sur une base d'un type du terminal mobile, dans lequel le type du terminal mobile est déterminé sur une base d'une Identité d'Equipement de Station Mobile Internationale, IMEI, l'identité d'équipement de station mobile internationale, IMEI, étant demandée par au moins un des suivants : le terminal mobile demandant le service additionnel, un registre résidant dans un réseau de communication mobile,
- comparer au moins une caractéristique avec une valeur de comparaison définie pour la caractéristique (230),
- fournir le service additionnel si un nombre prédéterminé d'au moins une caractéristique comparée satisfait à une valeur de comparaison définie pour au moins une caractéristique (240).
